# EUROPÄISCHE PATENTSCHRIFT

(11) **EP 4 187 456 B1**
(45) Veröffentlichungstag und Bekanntmachung des Hinweises auf die Patenterteilung: **29.04.2026**
(21) Anmeldenummer: 21211226.2
(22) Anmeldetag: 30.11.2021
(51) Int. Cl.: G06Q 10/04

(54) **COMPUTER-IMPLEMENTIERTES VERFAHREN UND HARDWAREMODUL ZUM BESTIMMEN EINER STRECKENROUTE**
COMPUTER-IMPLEMENTED METHOD AND HARDWARE MODULE FOR DETERMINING A ROUTE
PROCÉDÉ MIS EN OEUVRE PAR ORDINATEUR ET MODULE MATÉRIEL PERMETTANT DE DÉTERMINER UN ITINÉRAIRE

(43) Veröffentlichungstag der Anmeldung: 31.05.2023
(73) Patentinhaber: Mansio GmbH, 52066 Aachen (DE)
(72) Erfinder: Schürmeyer, Maik, 52074 Aachen (DE)
(74) Vertreter: Pültz, Roland

(56) Entgegenhaltungen:
- DE-A1- 102004 029 821
- GB-A- 2 378 541
- US-A1- 2017 307 391
- US-A1- 2019 318 629
- US-B1- 6 338 534
- US-B1- 9 108 605

## Beschreibung

Die Erfindung betrifft ein computer-implementiertes Verfahren und Hardwaremodul zum Bestimmen einer Streckenroute, sowie ein entsprechendes Computerprogrammprodukt.

Die Organisation eines Transports von Objekten wie Stückgüter, Schüttgüter, Flüssigkeiten, gezogenen Fahrzeugkomponenten und einer oder mehrerer Personen stellt eine logistische Herausforderung dar. Dabei ist nicht nur eine Streckenroute des Transports von einem Start zu einem Ziel zu bestimmen, sondern weitere einzelne Parameter, die auf das Objekt zugeschnitten sind. Beispielsweise muss bei dem Transport von zu kühlenden Lebensmitteln darauf geachtet werden, dass die Kühlkette nicht unterbrochen wird. Somit muss eine Kühlung nicht nur vor und nach dem Transport, sondern auch während dem Transport gewährleistet sein. Nicht jede Art von Fahrzeug kann eine solche Kühlung gewährleisten. Hinzukommen weitere Parameter wie das Gesamtgewicht und das Gesamtvolumen der Lebensmittel. Das Fahrzeug zum Transportieren der Lebensmittel muss somit verschiedene Anforderungen erfüllen.

Der operative Güterverkehr wird vor allem durch Verlader, Speditionen und Frachtführer geregelt. Die am logistischen Prozess beteiligten Akteure stellen verschiedene bereits festgelegte Streckenrouten, Fahrzeuge, Kosten, Fahrzeiten, Verfügbarkeiten, usw. bereit. Beim Güter- und Personenverkehr auf der Straße sind gesetzlich, tariflich und unternehmensspezifisch vorgegebene Lenk-, Ruhe-und Arbeitszeiten einzuhalten. Außerhalb der Lenkzeit darf der Fahrer nicht mit dem Fahrzeug weiterfahren. Sollte kein zweiter Fahrer bereitgestellt werden, hat dies zur Folge, dass das Fahrzeug bis zum Beginn der nächsten Lenkzeit nicht weiter transportiert wird und sich folglich die Gesamtdauer für den Transport zu dem Zielort verlängert.

Weiter kann es sinnvoll sein, dass das transportierte Objekt von einem ersten Fahrzeug auf ein zweites Fahrzeug nach einer Lenkzeit des Fahrers des ersten Lastfahrzeugs übergeben wird, um das Objekt an den Zielort zu befördern. Dies stellt weitere logistische Herausforderungen dar. Das erste Fahrzeug muss das Objekt zu einem Übergabeort transportieren und dort abladen bzw. abkoppeln. Wird nicht eine sofortige Übergabe an das zweite Lastfahrzeug ausgeführt, muss das Objekt an dem Übergabeort gesichert werden, damit kein anderes Fahrzeug bis zur Ankunft des zweiten Fahrzeugs das Objekt abtransportieren kann. Weiter kann es trotz einer Sicherung des Objekts zu einem Raub und/oder einer Beschädigung des Objekts kommen. Dies stellt ein erhöhtes Sicherheitsrisiko dar. Das zweite Fahrzeug muss ebenfalls zu dem Übergabeort und das Objekt entsichern können, um es entsprechend aufladen bzw. schleppen zu können. Handelt es sich bei der Sicherung beispielsweise um ein klassisches Schloss, müssen die Fahrer des ersten und des zweiten Fahrzeugs jeweils einen entsprechenden Schlüssel hierfür haben. Entsprechend muss vorab eine Verteilung der Schlüssel an die Fahrer gewährleistet sein.

Zusätzlich ist eine Belastung der jeweiligen Fahrer der Fahrzeuge zu berücksichtigen. Die Belastung ergibt sich nicht nur aus den jeweiligen Fahrzeiten, sondern auch allein aus der Tatsache, dass diese oft über lange Zeiträume Transporte an Orte durchführen, die nicht in der Nähe ihres Wohnorts liegen. Durch das EU-Mobilitätspaket dürfen Wochenruhezeiten nicht im Fahrzeug verbracht werden [Artikel 8 der VO (EG) Nr. 561/2006]. Innerhalb jedes Vier-Wochen-Zeitraumes muss ein Fahrer mindestens ein Mal an seinen Wohnort oder den Unternehmensstandort zurückkehren können, um dort seine Wochenruhezeit einzuhalten. Alle Fahrzeuge müssen ein Mal binnen jeder freien Kombination von acht zusammenhängenden Kalenderwochen in den Niederlassungsmitgliedstaat zurückkehren.

Darüber wurde die Regelung über die Kabotage in der gesamten EU verschärft. Ursprünglich (Artikel 8 und 9 der VO (EG) 1072/2009) dürfen im Anschluss an eine beladene grenzüberschreitende Beförderung, die vollständig im Kabotageland entladen wurde, drei Kabotagebeförderungen innerhalb von sieben Kalendertagen durchgeführt werden. Anschließend muss eine grenzüberschreitende Fahrt stattfinden. Mit der VO (EU) 2020/1055 dürfen innerhalb von vier Tagen nach Ende der Kabotagebeförderung keine weiteren Kabotagebeförderungen in diesem sogenannten Aufnahmemitgliedsstaat durchgeführt werden ("Abkühlphase").

Durch das Mobilitätspaket werden Sozialvorschriften der Berufskraftfahrerinnen und -fahrer verbessert. Gleichzeitig stellt es die Transportbranche bei der Planung und Durchführung von Langstreckentransporten vor neue Herausforderungen.

Weiter stellt der Transport von Objekten, Gütern und Personen auch eine Belastung für die Umwelt dar. Bei dem Beispiel der gekühlten Lebensmittel wird Energie zum Kühlen der Lebensmittel und zum Transport in Form von Antriebsmittel oder elektrische Energie verwendet. Würde sich die Transportzeit zum Transport der Lebensmittel zu dem Ziel verkürzen lassen, würde weniger Energie zum Kühlen der Lebensmittel notwendig sein. Ebenso kann es sein, dass die vorgegebenen Streckenrouten von Speditionen derart gewählt sind, dass verschiedene Zwischenziele erreicht werden, um so mehrere Ziele mit einer Streckenroute erreichen zu können. Nichtsdestotrotz kann das eine längere Streckenroute und/oder einen zeitlich längeren Transport für ein Objekt, ein Gut und/oder eine Person bedeuten, was einen erhöhten Antriebsmittel bzw. elektrischen Energiebedarf darstellt.

Hinzukommt, dass entsprechend Parkplätze für die Fahrzeuge bereitgestellt werden müssen, insbesondere auf Raststätten, um eine Übergabe und/oder ein Abladen von Objekten zu ermöglichen. Diese Parkplätze weisen eine limitierte Anzahl an Parkplätzen auf. Insbesondere sind sichere Parkflächen im Straßenverkehrssektor eine knappe Ressource. Durch den zunehmenden Im- und Export steigt die Anzahl an Fahrzeugen und Objekten und die Auslastung der Parkplätze. Der Ausbau und Umbau solcher Parkplätze ist kostenintensiv und bedeutet weitere bebaute Flächen und somit einen negativen Umwelteinfluss. Um die bisherigen bereitgestellten Parkplätze effizient zu nutzen, bedarf es einer Lösung.

Es besteht folglich ein Bedarf an einer kostenoptimierten, vereinfachten, zeitlich optimierten, universellen Schnittstelle zum Bereitstellen eines Transports von Objekten, Gütern und/oder Personen mit erhöhter Sicherheit und geringerem Antriebsmittel- und/oder elektrischen Energieverbrauch, wobei über die Schnittstelle auf Fahrzeuge, Fahrer, Ressourcen, usw. von verschiedenen Logistikdienstleistern zugegriffen werden kann.

US 2019/318629 A1 beschreibt ein System für einen Ressourcentransport mit einem Routingbefehl-Subsystem. Das Routing-Befehlssubsystem ist so konfiguriert, dass es kommunikationsfähig mit einer ersten Eingabevorrichtung an einem ersten Ort gekoppelt ist, wobei die erste Eingabevorrichtung so konfiguriert ist, dass sie einen ersten Ressourcenfaktor einer Ressource an dem ersten Ort bestimmt, und mit einer Ortseingabevorrichtung, die einem Transporter zugeordnet ist, wobei der Transporter so konfiguriert ist, dass er die Ressource transportiert, und die Ortseingabevorrichtung so konfiguriert ist, dass sie einen Transporterort bestimmt. Das Routing-Befehlssubsystem ist ferner so konfiguriert, dass es einen ersten Endpunkt einer Transporterroute zu einem ersten alternativen Standort ändert, der zumindest teilweise auf dem ersten Ressourcenfaktor und dem Transporterstandort basiert.

GB 2 378 541 A beschreibt ein Verfahren, das es einem Benutzer ermöglicht, eine Reise über ein Transportmittel zu unternehmen, das die folgenden Schritte umfasst: Bereitstellen eines mobilen Kommunikationsgeräts für einen Benutzer; Bereitstellen eines Fahrtenvermittlers, der zur Kommunikation mit dem Kommunikationsgerät geeignet ist, wobei der Fahrtenvermittler Zugang zu Informationen hat, die sich auf fahrplanmäßige Transportmittel und -dienste und geographische Daten beziehen, die sich auf Gebiete beziehen, die von den fahrplanmäßigen Transportmitteln und -diensten abgedeckt werden, wobei der Fahrtenvermittler ferner Zugang zu Informationen hat, die sich auf außerplanmäßige Transportmittel und -dienste und geographische Daten beziehen, die sich auf Gebiete beziehen, die von den außerplanmäßigen

Transportmitteln abgedeckt werden. Das Verfahren umfasst ferner die folgenden Schritte: der Benutzer teilt dem Fahrtenvermittler über das mobile Kommunikationsgerät seinen aktuellen Standort, sein beabsichtigtes Ziel und seine Absicht mit, Transportmittel zu benutzen; der Fahrtenvermittler konsultiert die Informationen, die sich auf die planmäßigen und außerplanmäßigen Transportmittel und -dienste beziehen, sowie geographische Daten, die sich auf Gebiete beziehen, die von den Transportdiensten abgedeckt werden, und stellt dem Benutzer anschließend ein Fahrtenprofil zur Verfügung; der Fahrtenvermittler stellt dem Benutzer und den Transportdiensten ausreichende Informationen zur Verfügung, um den Benutzer in die Lage zu versetzen, seine Fahrt durchzuführen; und der Fahrtenvermittler überwacht kontinuierlich den Standort des Benutzers über das mobile Kommunikationsgerät.

US 9 108 605 B1 beschreibt ein Druckluftbrems-Sicherheitsverriegelungssystem, das Sattelanhänger in einer festen Position hält, um Diebstahl zu verhindern, und das an eine Druckluftbremsleitung des Sattelanhängers angeschlossen wird. Das System umfasst ein batteriebetriebenes Ventil, das die Luftleitungen innerhalb des Bremssystems bei einem niedrigen Druck isoliert, wodurch eine kontinuierliche Bremsung der Räder aufrechterhalten wird. Das System umfasst einen verschlossenen Schaltkasten zur Sicherung und zum Schutz einer Benutzerschnittstelle, die zur Aktivierung des Systems durch Eingabe eines numerischen Codes über eine Tastatur oder durch ein Bypass-Schlüsselschloss dient. Eine drahtlose Fernbetätigungsvorrichtung wird ebenfalls verwendet, um das System aus der Ferne zu aktivieren. Im deaktivierten Zustand lässt das System das Bremssystem des Sattelanhängers wie gewohnt arbeiten. Im aktivierten Zustand zieht das System die Federspeicherbremsen des Sattelanhängers sicher an und verhindert so Bewegungen und mögliche Diebstähle

DE 10 2004 029821 A1 beschreibt eine Diebstahlsicherung für ein Fahrzeug mit einer Zugmaschine und einem über eine Kupplung an die Zugmaschine angebundenen Auflieger, wobei der Auflieger ein Steuergerät und Leitungen zur Versorgung und Steuerung umfasst und die Kupplung eine elektrisch oder elektronisch steuerbare Verriegelungsvorrichtung aufweist, die mit dem Steuergerät zur Unterbrechung wenigstens einer der Leitungen verbunden ist. Zur Entriegelung der Verriegelungsvorrichtung sind ein erstes Zugangskontrollmittel und zur Aufhebung der Unterbrechung der Leitung durch das Steuergerät ein zweites Zugangskontrollmittel vorgesehen.

US 6 338 534 B1 beschreibt ein Diebstahlschutzsystem für Anhänger mit einem üblichen pneumatischen Anhängerbremssystem. Ein normalerweise geschlossenes Magnetventil wird in die Leitung geschaltet, die Luft zum Lösen der Anhängerfeststellbremsen liefert, und ein Signalempfänger, der ein elektrisches Signal von einem Sender in der Traktorkabine empfangen kann, muss veranlasst werden, das Magnetventil zu betätigen, um das Ventil zum Lösen der Anhängerfeststellbremsen zu öffnen. Das Signal vom Sender zum Empfänger kann über ein elektrisches Kabel von der Zugmaschine zum Anhänger übertragen werden oder ein per Funk übertragenes Signal sein. Das Magnetventil ist mit einer pneumatischen Verriegelung versehen, so dass die Feststellbremsen gelöst bleiben, solange Luftdruck vorhanden ist. Der Signalgeber ist mit einer Sicherung gegen unbefugte Benutzung versehen, die aus einem Schlüsselschalter, einem Tastenfeld zur Eingabe einer Identifikationsnummer, einem Magnetkartenleser oder einer anderen Vorrichtung bestehen kann. Das Magnetventil und der Empfänger sind in einem verschlossenen Schrank untergebracht, und ein Umgehungsventil befindet sich ebenfalls in dem Schrank. Der Empfänger kann so programmiert werden, dass die Lichter ganz oder teilweise oder nacheinander eingeschaltet werden müssen, um die Bremsen zu lösen.

Weiterer Stand der Technik ist aus US 2017/307391 A1 bekannt, wo eine Optimierung der Routenplanung auf der Grundlage von energiebezogenen Überlegungen in Bezug auf ein einzelnes Fahrzeug offenbart wird.

Es ist daher die Aufgabe der vorliegenden Erfindung, ein Verfahren, ein Hardwaremodul und ein Computerprogrammprodukt bereitzustellten, welches einen oder mehrere der zuvor genannten Nachteile behebt.

Diese Aufgabe wird gemäß einem ersten Aspekt durch ein computer-implementiertes Verfahren zum Bestimmen einer Streckenroute gemäß Anspruch 1 gelöst. Das Verfahren umfasst ein Bereitstellen einer Datenstruktur, welche zwei oder mehr Transportressourcen charakterisiert, wobei jeweils eine Transportressource der Transportressourcen zumindest ein Fahrzeug zum Transport eines Objekts. Die jeweils eine Transportressource der Transportressourcen kann weiter einen Fahrzeugführer, zumindest eine Eignung des Fahrzeugs bzw. des Fahrzeugführers zum Transport des Objekts, einen aktuellen Standort der Transportressource und/oder einen voraussichtlichen Standort der Transportressource umfassen. Weiter umfasst das Verfahren ein Empfangen einer Streckeneingabe, wobei die Streckeneingabe ein zu transportierendes Objekt und einen Start und ein Ziel des Objekts charakterisiert. Weiter werden zwei oder mehr Transportressourcen zum Transportieren des Objekts von dem Start zu dem Ziel bestimmt. Das Verfahren umfasst weiter ein Bestimmen zumindest eines Übergabeorts und/oder zumindest eines Übergabezeitbereichs zum Übergeben des zu transportierenden Objekts von einer das Objekt übergebenden Transportressource zu einer das Objekt übernehmenden Transportressource und ein Bestimmen, mittels eines Optimierungsalgorithmus, zumindest einer Streckenroute von dem Start zu dem Ziel basierend auf dem Übergabeort und/oder dem Übergabezeitbereich.

Mittels des vorgeschlagenen Verfahrens kann auf Transportressourcen von verschiedenen Frachtführern zugegriffen werden und basierend auf diesem Transportressourcenpool zumindest eine passende Transportressource für den Transport des Objekts bestimmt werden. Weiter kann eine Streckenroute von dem Start zu dem Ziel individuell für jedes Objekt bestimmt werden und somit eine schnellste und/oder kostensparendste und/oder sicherste und/oder ökologischste Streckenroute gewählt werden. Dies wird insbesondere dadurch erreicht, dass der Übergabeort und/oder der Übergabezeitbereich für die Übergabe der Transportressourcen bestimmt werden und basierend auf diesem bestimmten Übergabeort und/oder diesem bestimmten Übergabezeitbereich die Streckenroute bestimmt wird. Weiter können mittels des vorgeschlagenen Verfahrens zwei oder mehr Transportressourcen mit jeweils einem Fahrzeugführer bestimmt werden. Zusätzlich wird nur ein einzelnes Fahrzeug verwendet. Die Fahrzeugführer können sich entsprechend ihrer Lenkzeiten beim Führen des Fahrzeugs abwechseln. Es findet ein sogenannter fliegender Wechsel statt. Dies ist unter anderem vorteilhaft bei Langreisestrecken mit Reisebussen, sodass die Gesamtdauer der Reise für die Langreisestrecke verkürzt wird im Vergleich zu dem Fall, in dem ein einzelner Fahrer die gesamte Langreisestrecke fährt.

Das Verfahren kann weiter ein Bestimmen umfassen, dass ein Transport des Objekts mittels einer Transportressource der Transportressourcen von dem Start zu dem Ziel zumindest eine Ruhezeit eines Fahrzeugführers der Testtransportressource und/oder Standzeit der Transportressource umfasst. Um die Transportzeit zum Transport des Objekts von dem Start zu dem Ziel zu verkürzen, werden die zwei oder mehr Transportressourcen bestimmt. Die Standzeit charakterisiert eine Zeit, in der die Transportressource steht und nicht weiterfährt. Diese kann beispielsweise durch ein Auftanken des Tanks und/oder ein Aufladen einer Batterie des Fahrzeugs erfolgen.

Der voraussichtliche Standort der Transportressource kann basierend auf einer Fortbewegungsgeschwindigkeit der Transportressource und einer vorbestimmten Zeit bestimmt werden. Weiter können Parameter wie eine Verkehrslage, eine Uhrzeit, ein Wochentag und dergleichen berücksichtigt werden.

Ein Fahrzeug der Transportressource kann ein zumindest teilweise autonom fahrendes und/oder fliegendes Fahrzeug, ein Kraftfahrzeug, ein Pkw, ein Lkw, ein Bus, ein Zug, ein Flugzeug und/oder ein Schiff sein.

Die Datenstruktur kann vorab bereitgestellt sein und/oder mittels weiterer Eingaben geändert und/oder ergänzt werden. Insbesondere können Dateneingaben empfangen werden und in der Datenstruktur abgebildet sein, wobei die Dateneingaben von einem Netzwerk, einer Software und/oder einem Benutzer empfangen werden können. Die Datenstruktur kann in einem Netzwerk und/oder einer Cloud bereitgestellt sein.

Weiter kann der Optimierungsalgorithmus ein Maschinenlernalgorithmus sein und mittels eines Hardwaremoduls ausgeführt werden. Alternativ oder zusätzlich kann der Optimierungsalgorithmus- bzw. der Maschinenlernalgorithmus in einem Netzwerk und/oder einer Cloud ausgeführt werden.

Das zu transportierende Objekt umfasst zumindest ein Gut und/oder zumindest eine gezogene Fahrzeugkomponente. Das Gut ist durch zumindest eines von einer Abmessung, erforderlichen Lademetern, einer Masse des Guts, einer Anzahl der mit dem Gut gefüllten Transporteinheiten (bspw. Behälter), einer Verpackungsbeschreibung und einer Transportanforderung des Guts charakterisiert. Die Verpackungsbeschreibung kann zumindest eines von einer Art von Ladehilfsmitteln und/oder Transporteinheiten, insbesondere Behältern, einer Unterfahrbarkeit und einer Kranbarkeit charakterisieren. Die Transportanforderungen können zumindest eines von einer Temperatur, einer Ladungssicherung, einer Hygieneanforderung, einer Sicherheit und einer seitlichen Beladung charakterisieren. Die gezogene Fahrzeugkomponente ist durch zumindest eine technische Angabe der Fahrzeugkomponente charakterisiert. Die gezogene Fahrzeugkomponente kann durch zumindest eines von einem Besitzer, einem Eigentümer, einer Art, einer Identifikation und der technischen Angabe der Fahrzeugkomponente charakterisiert sein. Die Art der Fahrzeugkomponente kann einen Sattelauflieger, eine Wechselbrücke, einen Anhänger, einen Container und eine Lafette charakterisieren. Die Identifikation kann ein Nummernschild und/oder eine Fahrgestellnummer charakterisieren. Weiter können die technischen Angaben zumindest eines von einer Sattelhöhe, elektrischen Anschlüssen, pneumatischen Anschlüssen, geometrischen Abmessungen, Gewichtsangaben und Achslasten der Transportressource, insbesondere des Fahrzeugs charakterisieren.

Die Streckeneingabe kann weitere eine Identität einer die Streckeneingabe eingebenden Person und/oder Gesellschaft charakterisieren.

Der Start kann durch zumindest eines von einer frühestmöglichen Startzeit, einer spätmöglichsten Startzeit, eine voraussichtlichen Beladezeit zum Beladen des Objekts auf die das Objekt transportierende (übergebende/übernehmende) Transportressource und einen Startort charakterisiert sein. Alternativ oder zusätzlich kann das Ziel durch zumindest eines von einer frühestmöglichen Zielzeit, einer spätmöglichsten Zielzeit, eine voraussichtlichen Entladezeit zum Entladen des Objekts an dem Ziel und einen Zielort charakterisiert sein.

Die Transportressource kann weiter durch zumindest eines der Folgenden charakterisiert sein: ein das der Transportressource zugeordnetes Unternehmen; eine Preisangabe für den Transport mittels der Transportressource; eine oder mehrere Fahrerangaben zu einem Fahrer der Transportressource. Die Fahrerangabe kann einen Namen, eine Ausweisnummer, eine Führerscheinnummer, eine Fahrerkartennummer, einen oder mehrere mögliche Übernachtungsorte, eine Qualifikation, eine aktuelle und/oder voraussichtliche Lenk-, Ruhe- und/oder Arbeitszeit des Fahrers charakterisieren. Die Qualifikation des Fahrers kann auf eine zumindest eines von einer Führerscheinklasse, einer Gefahrenguttransporterlaubnis, einer Bewertungskennzahl und Sprachkenntnisse des Fahrers hinweisen. Die Bewertungskennzahl kann basierend auf den Informationen des Fahrers bestimmt und/oder durch eine Eingabe vorbestimmt bzw. geändert werden. Die Transportressource kann weiter eine oder mehrere Fahrzeugangaben zur Identifikation des Fahrzeugs der Transportressource charakterisieren, wobei die Fahrzeugangabe zumindest eines von einem Fahrzeughalter, einem Kennzeichen, einer Fahrgestellnummer, einer ID des Tachographen, einer Zulassungsbeschränkung und einer technischen Angabe charakterisiert. Die technische Angabe kann zumindest eines von einer Fahrzeugart, einer Sattelhöhe, elektrischen Anschlüssen, pneumatischen Anschlüssen, geometrischen Abmessungen, Gewichtsangaben, Achslasten und einer Reichweite umfassen.

Das Bestimmen des Übergabeorts und/oder des Übergabezeitbereichs erfolgt basierend auf einer zeitlichen und/oder räumlichen Streckenreichweite der bestimmten Transportressourcen, wobei die zeitliche und/oder die räumliche Streckenreichweite basierend auf zumindest einem von einem Antriebsmittelfüllstand, insbesondere einem aktuellen und/oder voraussichtlichen Antriebsmittelfüllstand des Fahrzeugs, einem Energiestand, insbesondere einem aktuellen und/oder voraussichtlichen Energiestand einer elektrischen Batterie des Fahrzeugs, einer aktuellen und/oder voraussichtlichen Restlenkzeit eines Fahrers des Fahrzeugs, einem aktuellen und/oder voraussichtlichen Standort des Fahrers und/oder der Verfügbarkeit einer streckenbegleitenden Energieversorgungsinfrastruktur, insbesondere einer Oberleitungsstruktur, bestimmt wird.

Das Bestimmen der zumindest einen Streckenroute kann ein Bestimmen von zwei oder mehr Streckenrouten umfassen. Es kann mehrere Streckenrouten geben, welche sinnvoll sein können, sodass einem Benutzer diese Streckenrouten vorgeschlagen werden können.

Die zumindest eine Streckenroute oder die zwei oder mehr Streckenrouten können weiter basierend auf zumindest einem von zu verwendenden Transportressourcen, einer räumlichen und/oder zeitlichen Verfügbarkeit infrastruktureller Einrichtungen, einer aktuellen und/oder voraussichtlichen Verkehrslage entlang einer Transportstrecke und zumindest einer vorbestimmten Zielgröße bestimmt werden. Die Transportstrecke kann der Streckenroute entsprechen und/oder in Teiltransportstrecken der jeweiligen Transportressourcen aufgeteilt sein. Die infrastrukturellen Einrichtungen können Verkehrswege, Tankstellen, Ladestationen, Wechselstationen für Batterien, weitere Fahrer, insbesondere Standorte der weiteren Fahrer und/oder Fahrzeugkomponenten umfassen. Die zumindest eine Zielgröße kann einen vorbestimmten Wert und/oder einen vorbestimmten Wertebereich zumindest eines von der Transportstrecke der Streckenroute, einer Transportzeit, einer Transportsicherheit, Transportkosten, einer ökologischen Größe der zu verwendenden Transportressourcen, der räumlichen und/oder zeitlichen Verfügbarkeit infrastruktureller Einrichtungen, der aktuellen und/oder der voraussichtlichen Verkehrslage entlang der Transportstrecke charakterisieren. Die ökologische Größe kann einen Antriebsmittelverbrauch, einen Energieverbrauch und/oder eine CO2-Emission der Transportressource, insbesondere des Fahrzeugs charakterisieren.

Der Übergabezeitbereich kann eine oder mehrere Wochen, Tage, Stunden und/oder Minuten umfassen.

Das Verfahren kann weiter ein Steuern, insbesondere ein schlüsselloses und fernsteuerbares Steuern einer Sicherung des Objekts und/oder der Transportressource umfassen, derart, dass eine Entnahme des Guts und/oder ein Koppeln mit einer Transportressource temporär verhindert bzw. ermöglicht wird.

Das Verfahren kann weiter ein Ausgeben einer Streckenrouteninformation umfassen, die zumindest eines von der zumindest einen bestimmten Streckenroute, den zwei oder mehr Transportressourcen, den Übergabeort und/oder den Übergabezeitbereich, einen Kostenwert des Transports mittels zumindest eines der zwei oder der zwei oder mehr Transportressourcen, der Streckenroutenlänge, einer voraussichtlichen Dauer für den Transport des Objekts von dem Start zu dem Ziel, Angaben zur Transportsicherheit, Angaben zur ökologischen Größe, dem aktuellen und/oder voraussichtlichen Standort des Fahrers, dem aktuellen Standort des Fahrzeugs und einem aktuellen Standort des Objekts umfassen. Die Streckenrouteninformation kann mittels einer Ausgabe-und/oder Anzeigevorrichtung, wie einem Computer, einem Laptop, einem Smartphone, einem Tablet, einem Navigationssystem und/oder einem Boardcomputer eines Fahrzeugs ausgegeben werden. Der Kostenwert basiert auf Kosten des Fahrers, des Fahrzeugs, möglicher Zölle, möglicher Steuern, möglicher Park-, Umbrück- und Versicherungsgebühren, mögliche Vermittlungsgebühren und/oder weiterer Kosten, die für den Transport des Objekts anfallen können.

Die Aufgabe wird gemäß einem zweiten Aspekt durch ein Computerprogrammprodukt zum Bestimmen einer Streckenroute gelöst, umfassend Befehle, die bewirken, dass ein Prozessor ein Verfahren gemäß dem ersten Aspekt ausführt, wenn das Programm durch den Prozessor ausgeführt wird.

Die Aufgabe wird gemäß einem dritten Aspekt durch ein Hardwaremodul zum Bestimmen einer Streckenroute gelöst, umfassend: einen Speicher, auf dem ein Computerprogrammprodukt gemäß dem zweiten Aspekt gespeichert ist; und einen Prozessor, der zum Ausführen des Computerprogrammprodukts eingerichtet ist.

Das Hardwaremodul kann ein Logikbaustein, ein IC, ein ASCI, ein FPGA, eine Rechenverarbeitungseinheit oder ähnliches sein. Das Hardwaremodul kann ein Computer sein. Der Prozessor kann eine CPU oder eine integrierte Schaltung in Form eines Mikroprozessors oder Mikrocontrollers sein. Der Speicher kann ein nichtflüchtiger Speicher sein. Der Speicher kann dazu eingerichtet sein, Daten zu speichern, welche der Speicher von dem Prozessor und/oder einem Sendeempfänger des Hardwaremoduls empfängt. Der Sendeempfänger kann die Streckeneingabe, den Start, das Ziel und das Objekt von einem lokalen und/oder drahtlosen Netzwerk und/oder einem Cloud-Speicher erhalten. Der Sendeempfänger kann eine Schnittstelle sein, die dazu eingerichtet ist, Daten an einen Computer, ein mobiles Endgerät, den Prozessor, den Speicher, ein lokales oder externes Netzwerk und/oder eine Cloud zu senden und/oder von diesen Daten zu empfangen.

Ausführungen und Merkmale, die in Bezug auf das Verfahren des ersten Aspekts gemacht wurden, können ebenfalls als Verfahrensschritte der weiteren Aspekte ausgebildet sein.

Für weitere Vorteile, Ausführungsvarianten und Ausführungsdetails der weiteren Aspekte und ihrer möglichen Fortbildungen, wird auch auf die zuvor erfolgte Beschreibung zu den entsprechenden Merkmalen und Fortbildungen des Verfahrens verwiesen.

Bevorzugte Ausführungsbeispiele werden exemplarisch anhand der beiliegenden Figuren erläutert. Es zeigen:
- Fig. 1: ein schematisches Hardwaremodul zum Ausführen eines Verfahrens gemäß einem ersten und/oder dritten Aspekt;
- Fig. 2: ein schematisches Verfahren zum Bestimmen einer Streckenroute gemäß dem ersten Aspekt; und
- Fig. 3: einen schematischen Kartenausschnitt für das Bestimmen einer Streckenroute.

In den Figuren sind gleiche oder im Wesentlichen funktionsgleiche beziehungsweise -ähnliche Elemente mit den gleichen Bezugszeichen bezeichnet.

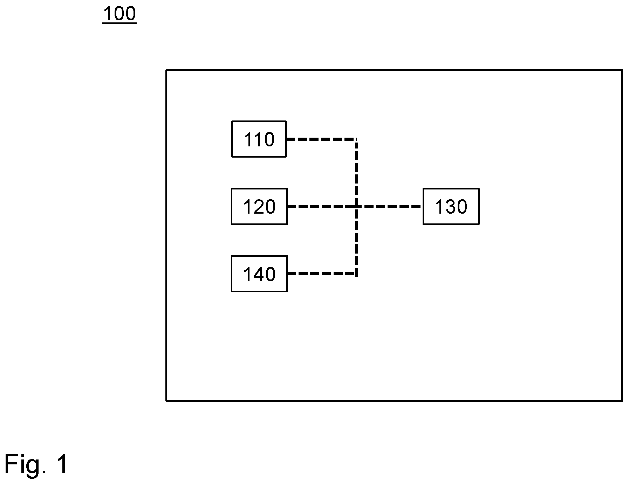

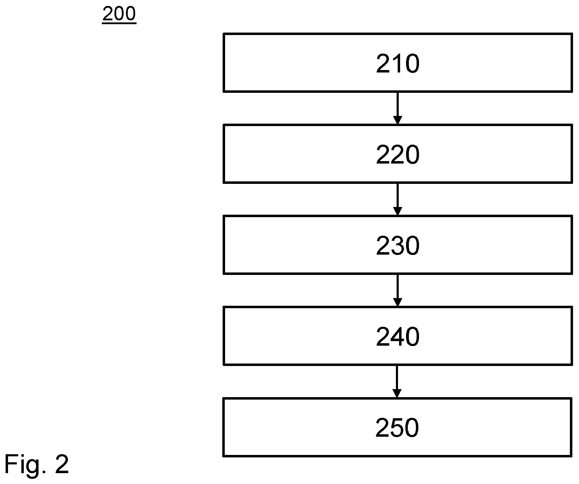

Die Fig. 1 zeigt ein Hardwaremodul 100 zum Bestimmen einer Streckenroute umfassend einen Speicher 110, einen Sendeempfänger 120, einen Prozessor 130 und eine Anzeigevorrichtung 140. Das Hardwaremodul 100 kann weitere Elemente aufweisen. Dabei ist der Speicher 110 zum Speichern und Bereitstellen von Informationen eingerichtet. Auf dem Speicher 110 können eine Datenstruktur wie nachfolgend mit Bezug zu Fig. 2 beschrieben und/oder ein oder mehrerer Computerprogrammprodukte gespeichert sein, umfassend Befehle, die bewirken, dass der Prozessor 130 zumindest ein Verfahren gemäß Fig. 2 ausführt. Weiter sind auf dem Speicher 110 Karteninformationen gespeichert, welche Straßeninformationen und Verkehrsweginformationen über Verkehrswege über Luft, Straße, Schiene und Wasser umfassen. Die Anzeigevorrichtung 140 ist dazu eingerichtet, zumindest die Streckenroute und/oder weitere die Streckenroute betreffende Informationen anzuzeigen. Weiter ist die Anzeigevorrichtung 140 dazu eingerichtet, eine Streckeneingabe zu empfangen. Die Anzeigevorrichtung 140 kann eine Eingabeeinheit zum Eingeben von Informationen und der Streckeneingabe umfassen und/oder einen berührungssensitiven Bildschirm (Touch-Bildschirm) umfassen, mittels dem eine Eingabe von einem Benutzer erfasst werden kann. Alternativ oder zusätzlich kann der Sendeempfänger 120 die oder eine Streckeneingabe von einem Netzwerk, einer Cloud und/oder einer anderen Vorrichtung empfangen.

Fig. 2 zeigt ein schematisches Verfahren 200 zum Bestimmen einer Streckenroute, wobei das Verfahren 200 von dem Prozessor 130 ausgeführt werden kann. Das Verfahren umfasst ein Bereitstellen 210 einer Datenstruktur, welche zwei oder mehr Transportressourcen charakterisiert, wobei jeweils eine Transportressource der Transportressourcen zumindest ein Fahrzeug 340, 350, 360 zum Transport eines Objekts umfasst. Die jeweils eine Transportressource der Transportressourcen kann weiter eine Eignung des Fahrzeugs 340, 350, 360 zum Transport des Objekts, einen aktuellen Standort der Transportressource und/oder einen voraussichtlichen Standort der Transportressource umfassen. Alternativ oder zusätzlich kann die Transportressource zumindest einen Fahrzeugführer und eine Eignung des Fahrzeugführers zum Transport des Objekts charakterisieren. Das Objekt kann zumindest eine Person, ein Gut und/oder eine gezogene Fahrzeugkomponente umfassen. Für die nachfolgende Beschreibung wird als gezogene Fahrzeugkomponente ein Sattelauflieger als Objekt verwendet, wobei die Beschreibung nicht auf solche eingeschränkt ist.

Die Datenstruktur kann bereitgestellt sein und/oder durch weitere Eingaben verändert und/oder erweitert werden. Insbesondere können Eingaben mittels dem Sendeempfänger 120 und/oder mittels der Anzeigevorrichtung 140 empfangen werden, welche eine Transportressource anlegen, charakterisieren und/oder abändern. Solche Eingaben können von Benutzer, Unternehmen, Websites und/oder weiterer Software-Anwendungen erhalten werden.

Die Transportressource charakterisiert zumindest ein Fahrzeug 340, 350, 360 und eine Eignung des Fahrzeugs 340, 350, 360 zum Transport eines Objekts. Um einen Sattelauflieger transportieren zu können, muss das Fahrzeug 340, 350, 360 das Objekt koppeln und/oder aufladen können, um es transportieren zu können. Weiter kann die Transportressource zumindest einen Fahrer des Fahrzeugs 340, 350, 360, einen aktuellen Standort des Fahrzeugs 340, 350, 360, einen aktuellen Standort des Fahrers, einen Wohnort des Fahrers, eine Restlenkzeit, die Resttageslenkzeit und/oder die Wochenlenkzeit des Fahrers, eine voraussichtliche und/oder aktuelle Ruhezeit des Fahrers, eine Fahrersicherheit des Fahrers und eine aktuelle und/oder maximale Belastung, insbesondere eine aktuelle und/oder maximale Lenk-, Ruhe- und/oder Arbeitszeit des Fahrers, umfassen.

Das Verfahren umfasst weiter ein Empfangen 220 einer Streckeneingabe, wobei die Streckeneingabe ein zu transportierendes Objekt und einen Start und ein Ziel des Objekts charakterisiert. Bei dem Start und/oder dem Ziel kann es sich um ein Land, eine Stadt, ein Viertel einer Stadt, eine Straße, eine Hausnummer, ein Unternehmensstandort, ein Paar Geokoordinaten und/oder einen Parkplatz handeln. Die Streckeneingabe kann über die Anzeigevorrichtung 140 eingegeben werden und/oder mittels dem Sendeempfänger 120 empfangen werden. Die Streckeneingabe kann von einem Netzwerk, einem Computer, einem Laptop, einem Smartphone, einem Navigationssystem, einem Telematiksystem, einer Speditionssoftware und dergleichen empfangen werden. Die Streckeneingabe charakterisiert das zu transportierende Objekt, hier den Sattelauflieger. Dabei kann die Streckeneingabe eine Art des Objekts, beispielsweise eine Art des Sattelaufliegers charakterisieren. Arten von Sattelaufliegern können unter anderem Planenauflieger, Kofferauflieger, Kühlkofferauflieger, Kippmuldenauflieger, Tiefladeauflieger, Pritschenauflieger, Containerauflieger, Schubbodenauflieger, Siloauflieger, Tankauflieger, Innenladeauflieger, Fahrzeugtransportauflieger und/oder Personentransportfahrzeuge sein. Weiter kann die Streckeneingabe ein Volumen und/oder ein Gewicht des Objekts charakterisieren. Zusätzlich oder alternativ kann die Streckeneingabe weitere an das zu transportierende Objekt gebundene Voraussetzungen für den Transport charakterisieren, beispielsweise ob es sich um ein zu kühlendes Objekt oder Gefahrgut handelt. Die Streckeneingabe charakterisiert weiter eine frühestmögliche Startzeit, eine spätmöglichsten Startzeit, eine voraussichtliche Beladezeit zum Beladen des Sattelaufliegers auf die den Sattelauflieger transportierende (übergebende/übernehmende) Transportressource und einen Startort des Sattelaufliegers.

Das Verfahren umfasst weiter ein Bestimmen 230 von zwei oder mehr Transportressourcen zum Transportieren des Sattelaufliegers. In einem weiteren Schritt 240 wird ein Übergabeort und ein Übergabezeitbereich zum Übergeben des zu transportierenden Sattelaufliegers von einer den Sattelauflieger übergebenden Transportressource zu einer den Sattelauflieger übernehmenden Transportressource der zwei oder mehr bestimmten Transportressourcen bestimmt. Das Verfahren umfasst weiter ein Bestimmen 250, mittels eines Optimierungsalgorithmus, zumindest einer Streckenroute von dem Start zu dem Ziel basierend auf dem bestimmten Übergabeort und dem bestimmten Übergabezeitbereich.

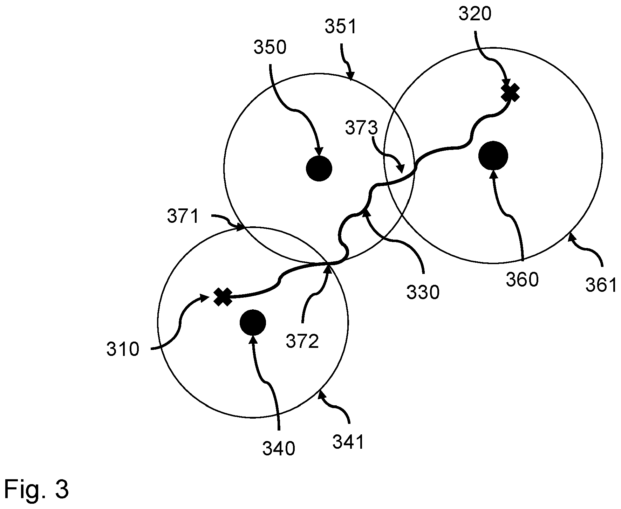

Die Fig. 3 zeigt exemplarisch die Bestimmung von drei Transportressourcen, hier drei Kraftfahrzeugen 340, 350, 360 betrachtet in einem Kartenabschnitt. Das Objekt, hier der Sattelauflieger, soll von einem Start 310 zu einem Ziel 320 transportiert werden. Basierend auf der Streckeneingabe umfassend den Start 310, das Ziel 320 und den Sattelauflieger bestimmt der Optimierungsalgorithmus zumindest eine erste Transportressource zum Transport des Sattelaufliegers. Jede Transportressource gibt eine jeweilige Sattelzugmaschine 340, 350, 360 mit Fahrer, einen aktuellen und/oder zukünftigen Standort des jeweiligen Kraftfahrzeugs an.

Basierend auf der Streckeneingabe mit einer spätmöglichsten Startzeit (bspw. nicht später als 10 Uhr vormittags) und dem aktuellen Standort des Kraftfahrzeugs 340 bestimmt der Optimierungsalgorithmus als erste Transportressource das Kraftfahrzeug 340, da dieses am nächsten an dem Start und somit am schnellsten bei dem Start ist. Weitere Transportressourcen, wie die der Kraftfahrzeuge 350, 360 scheiden aus, da diese eine längere Anfahrt aufweisen und es nicht vor der spätmöglichste Startzeit schaffen, an dem Start zu sein.

Der Optimierungsalgorithmus bestimmt eine erste Streckenreichweite des ersten Kraftfahrzeugs 340, welche exemplarisch durch einen Kreis 341 gekennzeichnet ist. Dieser dient nur der Veranschaulichung, eine Streckenreichweite kann einen variierenden Abstand zu dem Standort des jeweiligen Fahrzeugs aufweisen und muss folglich nicht rund wie in der Fig. 3 dargestellt sein. Dies kann dadurch bedingt sein, dass verschiedene Straßen und Verkehrsbedingungen vorliegen, sodass das Fahrzeug in derselben Zeit innerhalb einer Stadt eine kürzere Distanz und damit Streckenreichweite erreicht als außerhalb einer Stadt auf Landstraßen und/oder Autobahnen. Die Reichweite des Kraftfahrzeugs entlang der Transportstrecke wird außerdem durch dessen Position vor Übernahme des Objekts (Länge der Anfahrt) beeinflusst.

Eine Streckenreichweite einer Transportressource kann basierend auf zumindest einem von einem Antriebsmittelfüllstand, insbesondere einem aktuellen und/oder voraussichtlichen Antriebsmittelfüllstand des Fahrzeugs 340, 350, 360, einem Energiestand, insbesondere einem aktuellen und/oder voraussichtlichen Energiestand einer elektrischen Batterie des Fahrzeugs 340, 350, 360, einer aktuellen und/oder voraussichtlichen Restlenkzeit eines Fahrers des Fahrzeugs 340, 350, 360, einem aktuellen und/oder voraussichtlichen Standort des Fahrers und/oder der Verfügbarkeit einer streckenbegleitenden Energieversorgungsinfrastruktur bestimmt werden. In der Fig. 3 wurde zur Veranschaulich für die Streckenreichweiten der Kraftfahrzeuge 340, 350, 360 eine durchschnittliche Geschwindigkeit angenommen, mit der diese innerhalb einer vorbestimmten Zeitdauer unterwegs sein können.

Der Optimierungsalgorithmus bestimmt basierend auf der ersten Streckenreichweite, dass der Fahrer des Kraftfahrzeugs 340 zumindest eine Ruhezeit brauchen würde, um an das Ziel 320 zu gelangen. Um eine möglichst kurze Transportzeit des Objekts zu erreichen, bestimmt der Optimierungsalgorithmus zumindest eine zweite Transportressource mit einer zweiten Streckenreichweite. Die zweite Transportressource wird derart bestimmt, dass die zweite Transportressource den Sattelauflieger von der ersten Transportressource übernehmen und weiter transportieren kann. Wie in Fig. 3 dargestellt, existiert ein Überlappungsbereich der ersten und zweiten Streckenreichweiten, wobei zwei Überschneidungspunkte 371, 372 des Überlappungsbereichs gekennzeichnet sind. Basierend auf der zweiten Streckenreichweite des zweiten Kraftfahrzeugs 350 wird dessen Transportressource mittels des Optimierungsalgorithmus bestimmt.

Weiter bestimmt der Optimierungsalgorithmus einen Übergabeort und einen Übergabezeitbereich zur Übergabe des Sattelaufliegers von dem ersten Kraftfahrzeug 340 zu dem zweiten Kraftfahrzeug 350 insbesondere basierend auf den bestimmten ersten und zweiten Streckenreichweiten. Insbesondere bestimmt der Optimierungsalgorithmus den Übergabeort derart, dass dieser innerhalb des Überlappungsbereichs der ersten und zweiten Streckenreichweiten liegt. Innerhalb des Überlappungsbereichs können mehrere potentielle Übergabeorte vorliegen, welche untereinander weiter unterschieden werden können, bspw. basierend auf einer Sicherheitseinstufung oder den gesamten Transportkosten. Zur Sicherheit der Fahrer der Kraftfahrzeuge 340 und 350 und des Sattelaufliegers wird ein Übergabeort bei dem Überschneidungspunkt 372 bestimmt, da dieser die höchste Sicherheitseinstufung aufweist und somit am sichersten für die Fahrer und den Sattelauflieger ist.

Basierend auf den bestimmten ersten und zweiten Transportressourcen sowie des Übergabeorts wird ein erster Teil einer Streckenroute 330 mittels des Optimierungsalgorithmus bestimmt. Insbesondere wird die Streckenroute 330 derart bestimmt, dass sie eine schnellste Streckenroute darstellt.

Der Transportressourcenalgorithmus bestimmt weiter, dass die Summe der ersten und zweiten Reichweiten nicht ausreicht, um an das Ziel 320 zu gelangen. Folglich bestimmt der Transportressourcenalgorithmus zumindest eine dritte Transportressource mit einer dritten Reichweite ähnlich zu der zweiten Transportressource wie zuvor beschrieben und bestimmt das Kraftfahrzeug 360 und dessen Transportressource, sowie einen Übergabeort 373.

Bei jeder Übergabe wird ein Übergabezeitbereich bestimmt. Dieser Übergabezeitbereich kann derart gewählt sein, dass beide Fahrzeuge und beide Fahrer an dem Übergabeort sind, um eine simultane Übergabe bereitzustellen. Entsprechend muss der Sattelauflieger nicht gesichert werden. Alternativ kann der Übergabezeitbereich derart bestimmt werden, dass das Objekt, hier der Sattelauflieger, für eine vorbestimmte Zeitdauer an dem Übergabeort befindlich ist, bevor dieser von dem nächsten Kraftfahrzeug abtransportiert wird. Beispielsweise kann der Übergabezeitbereich eine Stunde betragen, welche beginnt, nachdem beispielsweise das erste Kraftfahrzeug 340 den Sattelauflieger an dem Übergabeort 372 abgeladen hat.

Zur Sicherung des Sattelaufliegers kann eine Sicherung bereitgestellt werden, welche insbesondere mittels drahtloser Kommunikation zwischen einem verschlossenen und einem geöffneten Zustand geschaltet werden kann. Es kann ein Verschlusssignal an die Sicherung nach dem Abladen von dem Fahrer des ersten Kraftfahrzeugs 340 und/oder automatisch basierend auf dem Standort des ersten Kraftfahrzeugs 340 und nach dem Abladen des Sattelaufliegers gesendet werden, sodass die Sicherung den Sattelauflieger verriegelt. Entsprechend kann der Sattelauflieger nicht von einem anderen Fahrzeug abtransportiert werden. Sobald das zweite Kraftfahrzeug 350 an dem Standort des Sattelaufliegers angekommen ist, kann ein Entriegelungssignal von dem Fahrer des zweiten Kraftfahrzeugs und/oder automatisch an die Sicherung gesendet bzw. angefragt werden, sodass der Sattelauflieger von dem zweiten Kraftfahrzeug 350 aufgesattelt werden kann.

Nachdem der Optimierungsalgorithmus die Streckenroute 330 bestimmt hat, wird eine Streckenrouteninformation ausgegeben, die zumindest eines von der bestimmten Streckenroute 330, der ersten, zweiten und/oder dritten Transportressource, der Anzahl und Dauer an Lenkzeiten und/oder Ruhezeiten, der Anzahl an Transportressourcen, dem Übergabeort und/oder dem Übergabezeitbereich, einem Kostenwert des Fahrers, des Fahrzeugs und/oder der Transportressource, einer voraussichtlichen Dauer für den Transport des Objekts, Angaben zur Transportsicherheit, Angaben zur ökologischen Größe, dem aktuellen Standort des Fahrers, dem aktuellen Standort des Fahrzeugs und einem aktuellen Standort des Objekts umfasst. Die Streckenrouteninformation kann mittels der Anzeigevorrichtung 140 angezeigt werden.

### BEZUGSZEICHEN

- 100: Hardwaremodul
- 110: Speicher
- 120: Sendeempfänger
- 130: Prozessor
- 140: Anzeigevorrichtung
- 200: Verfahren zur Bestimmung einer Streckenroute
- 210: Bereitstellen einer Datenstruktur
- 220: Empfangen einer Streckeneingabe
- 230: Bestimmen von zwei oder mehr Transportressourcen
- 240: Bestimmen eines Übergabeorts und/oder eines Übergabezeitbereichs
- 250: Bestimmen zumindest einer Streckenroute
- 310: Start
- 320: Ziel
- 330: Streckenroute
- 340: erstes Fahrzeug
- 341: erste Reichweite des ersten Fahrzeugs
- 350: zweites Fahrzeug
- 351: zweite Reichweite des zweiten Fahrzeugs
- 360: drittes Fahrzeug
- 361: dritte Reichweite des dritten Fahrzeugs
- 371: erster Übergabeort
- 372: zweiter Übergabeort
- 373: dritter Übergabeort

## Patentansprüche

1. Computer-implementiertes Verfahren (200) zum Bestimmen einer Streckenroute, umfassend die Schritte:
Bereitstellen (210) einer Datenstruktur, welche zwei oder mehr Transportressourcen (340, 350, 360) charakterisiert, wobei jeweils eine Transportressource (340, 350, 360) der Transportressourcen ein Fahrzeug zum Transport eines Objekts umfasst,
wobei das zu transportierende Objekt zumindest ein Gut und/oder eine gezogene Fahrzeugkomponente umfasst,
wobei das Gut durch zumindest eines von einer geometrischen Abmessung, den erforderlichen Lademetern, einer Masse, einer Anzahl der mit dem Gut gefüllten Transporteinheiten, einer Verpackungsbeschreibung und einer Transportanforderungen des Guts charakterisiert ist,
wobei die gezogene Fahrzeugkomponente durch zumindest eine technische Angabe der Fahrzeugkomponente charakterisiert ist;
Empfangen (220) einer Streckeneingabe, wobei die Streckeneingabe ein zu transportierendes Objekt und einen Start und ein Ziel des Objekts charakterisiert;
Bestimmen (230) von zwei oder mehr Transportressourcen (340, 350, 360) zum Transportieren des Objekts von dem Start zu dem Ziel;
Bestimmen (240) eines Übergabeorts und/oder eines Übergabezeitbereichs zum Übergeben des zu transportierenden Objekts von einer das Objekt übergebenden Transportressource zu einer das Objekt übernehmenden Transportressource der zwei oder mehr bestimmten Transportressourcen,
wobei das Bestimmen (240) des Übergabeorts und/oder des Übergabezeitbereichs basierend auf einer zeitlichen und/oder räumlichen Streckenreichweite (341, 351, 361) der bestimmten Transportressourcen erfolgt,
wobei die zeitliche und/oder die räumliche Streckenreichweite (341, 351, 361) basierend auf zumindest einem von einem Antriebsmittelfüllstand, insbesondere einem aktuellen und/oder voraussichtlichen Antriebsmittelfüllstand des Fahrzeugs, einem Energiestand, insbesondere einem aktuellen und/oder voraussichtlichen Energiestand einer elektrischen Batterie des Fahrzeugs, einer aktuellen und/oder voraussichtlichen Restlenkzeit eines Fahrers des Fahrzeugs, einem aktuellen und/oder voraussichtlichen Standort des Fahrers und/oder der Verfügbarkeit einer streckenbegleitenden Energieversorgungsinfrastruktur bestimmt wird;
Bestimmen (250), mittels eines Optimierungsalgorithmus, zumindest einer Streckenroute von dem Start zu dem Ziel basierend auf dem Übergabeort und/oder dem Übergabezeitbereich.

2. Verfahren nach Anspruch 1,
wobei die gezogene Fahrzeugkomponente durch zumindest eines von einem Besitzer, einem Eigentümer, einer Art, einer Identifikation und die technische Angabe der Fahrzeugkomponente charakterisiert ist.

3. Verfahren (200) nach Anspruch 1 oder 2,
wobei die Streckeneingabe weiter eine Identität einer die Streckeneingabe eingebenden Person und/oder Gesellschaft charakterisiert.

4. Verfahren (200) nach einem der vorherigen Ansprüche,
wobei der Start durch zumindest eines von einer frühestmöglichen Startzeit, einer spätmöglichsten Startzeit, eine voraussichtlichen Beladezeit zum Beladen des Objekts auf die das Objekt übergebende Transportressource und einen Startort charakterisiert ist, und/oder
wobei das Ziel durch zumindest eines von einer frühestmöglichen Zielzeit, einer spätmöglichsten Zielzeit, eine voraussichtlichen Entladezeit zum Entladen des Objekts an dem Ziel und einen Zielort charakterisiert ist.

5. Verfahren (200) nach einem der vorherigen Ansprüche,
wobei die Transportressource weiter durch zumindest eines der Folgenden charakterisiert ist:
ein der Transportressource zugeordnetes Unternehmen;
eine Preisangabe für den Transport mittels der Transportressource;
eine oder mehrere Fahrerangaben zu einem Fahrer der Transportressource,
wobei die Fahrerangaben einen Namen, eine Ausweisnummer, eine Führerscheinnummer, eine Fahrerkartennummer, einen oder mehrere mögliche Übernachtungsorte, eine Qualifikation, eine aktuelle und/oder voraussichtliche Lenk-, Ruhe- und/oder Arbeitszeit des Fahrers charakterisiert,
wobei die Qualifikation des Fahrers auf zumindest eines von einer Führerscheinklasse, einer Gefahrenguttransporterlaubnis, einer Bewertungskennzahl und Sprachkenntnisse des Fahrers hinweist;
eine oder mehrere Fahrzeugangaben zur Identifikation des Fahrzeugs der Transportressource,
wobei die Fahrzeugangabe zumindest eines von einem Fahrzeughalter, einem Kennzeichen, einer Fahrgestellnummer, einer ID des Tachographen, einer Zulassungsbeschränkung und einer technischen Angabe charakterisiert,
wobei die technische Angabe zumindest eines von einer Fahrzeugart, einer Sattelhöhe, elektrischer Anschlüsse, pneumatischer Anschlüsse, geometrischer Abmessungen, Gewichtsangaben, Achslasten und einer Reichweite umfasst.

6. Verfahren (200) nach einem der vorherigen Ansprüche,
wobei die zumindest eine Streckenroute oder zwei oder mehr Streckenrouten weiter basierend auf zumindest einem von zu verwendenden Transportressourcen, einer räumlichen und/oder zeitlichen Verfügbarkeit infrastruktureller Einrichtungen, einer aktuellen und/oder voraussichtlichen Verkehrslage entlang einer Transportstrecke und zumindest einer vorbestimmten Zielgröße bestimmt wird,
wobei die zumindest eine Zielgröße einen vorbestimmten Wert und/oder Wertebereich zumindest eines von der Transportstrecke der Streckenroute, einer Transportzeit, einer Transportsicherheit, Transportkosten, einer ökologischen Größe der zu verwendenden Transportressourcen, der räumlichen und/oder zeitlichen Verfügbarkeit infrastruktureller Einrichtungen, der aktuellen und/oder der voraussichtlichen Verkehrslage entlang der Transportstrecke charakterisiert,
wobei die ökologische Größe einen Antriebsmittelverbrauch, einen Energieverbrauch und/oder eine CO₂-Emission der Transportressource charakterisiert.

7. Verfahren (200) nach einem der vorherigen Ansprüche, weiter umfassend:
Steuern einer Sicherung des Objekts und/oder der Transportressource, derart, dass eine Entnahme des Guts und/oder ein Koppeln mit einer Transportressource verhindert bzw. ermöglicht wird.

8. Verfahren (200) nach einem der vorherigen Ansprüche, weiter umfassend:
Ausgeben einer Streckenrouteninformation, die zumindest eines von der zumindest einen bestimmten Streckenroute, den zwei oder mehr Transportressourcen, den Übergabeort und/oder den Übergabezeitbereich, einen Kostenwert des Transports mittels einem der zwei oder der zwei oder mehr Transportressourcen, der Streckenroutenlänge, einer voraussichtlichen Dauer für den Transport des Objekts von dem Start zu dem Ziel, einer Angabe zur Transportsicherheit, einer ökologischen Größe, dem aktuellen und/oder voraussichtlichen Standort des Fahrers, dem aktuellen Standort des Fahrzeugs und einem aktuellen Standort des Objekts umfasst.

9. Computerprogrammprodukt zum Bestimmen einer Streckenroute umfassend Befehle, die bewirken, dass ein Prozessor ein Verfahren (200) nach einem der Ansprüche 1 bis 8 ausführt, wenn das Programm durch den Prozessor ausgeführt wird.

10. Hardwaremodul (100) zum Bestimmen einer Streckenroute, umfassend:
einen Speicher (110), auf dem ein Computerprogrammprodukt gemäß Anspruch 9 ist; und
einen Prozessor (130), der zum Ausführen des Computerprogrammprodukts eingerichtet ist.

## Claims

1. Computer implemented method (200) for determining a route, comprising the steps:
providing (210) a data structure characterizing two or more transport resources (340, 350, 360), wherein each transport resource (340, 350, 360) of the transport resources comprises a vehicle for transporting an object,
wherein the object to be transported comprises at least one good and/or towed vehicle component,
wherein the good is **characterized by** at least one of a geometric measurement, the required loading meter, a mass, a number of transport units filled with the good, a packaging description and a transport requirement of the good,
wherein the towed vehicle component is **characterized by** at least one technical indication of the towed vehicle component;
receiving (220) route input, wherein the route input characterizes an object to be transported and a start and a destination of the object;
determining (230) two or more transport resources (340, 350, 360) for transporting the object from the start to the destination;
determining (240) a handover place and/or a handover time range for handing over the object to be transported from a transport resource delivering the object to a transport resource receiving the object of the two or more determined transport resources,
wherein the determining (240) of the handover place and/or the handover time range is performed based on a temporal and/or or spatial travel range (341, 351, 361) of the determined transport resources,
wherein the temporal and/or spatial travel range (341, 351, 361) is determined based on at least one of a fuel level, in particular a current and/or expected fuel level of the vehicle, an energy level, in particular a current and/or expected energy level of an electric battery of the vehicle, a current and/or expected remaining driving time of a driver of the vehicle, a current and/or expected location of the driver and/or the availability of an energy providing infrastructure along the route;
determining (250), by means of an optimization algorithm, at least one route from the start to the destination based on the handover place and/or the handover time range.

2. Method according to claim 1,
wherein the towed vehicle component is **characterized by** at least one of an operator, an owner, a type, an identifier and the technical specification of the towed vehicle component.

3. Method (200) according to claim 1 or 2,
wherein the route input further characterizes an identity of a person and/or company inputting the route input.

4. Method (200) according to any of the previous claims,
wherein the start is **characterized by** at least one of an earliest possible starting time, a latest possible starting time, an expected loading time for loading the objects onto the transport resource handing over the object, and a starting location, and/or
wherein the destination is **characterized by** at least one of an earliest possible destination time, a latest possible destination time, an expected unloading time for unloading the objects at the destination and a destination place.

5. Method (200) according to any of the previous claims,
wherein the transport resource is further **characterized by** at least one of the following:
a company assigned to the transport resource;
price information for the transport by means of the transport resource;
one or more driver indications of a driver of the transport resource,
wherein the driver indications characterize a name, an identification number, a driver's license number, a driver card number, one or more possible overnight locations, a qualification, a current and/or expected driving time, a current and/or expected rest time and/or a current and/or expected working time of the driver,
wherein the qualification of the driver indicates at least one of a category of a driver's license class, a dangerous goods transport permit, a rating figure, and language skills of the driver;
one or more vehicle indications for identifying the vehicle of the transport resource,
wherein the vehicle indication characterizes at least one of a vehicle keeper, a license plate number, a chassis number, a tachograph ID, a registration restriction, and a technical specification,
wherein the technical specification comprises at least one of a vehicle type, a fifth-wheel height, electrical connections, pneumatic connections, geometric dimensions, weighting indications, axial loads, and a range.

6. Method (200) according to any of the previous claims,
wherein the at least one route or two or more routes are determined further based on transport resources to be used, a spatial and/or temporal availability of infrastructural facilities, a current and/or expected traffic condition along a transport route and at least one predetermined target value,
wherein the at least one target value characterizes a predetermined value and/or value range of at least one of the transport route of the route, a transport time, a transport security, transport costs, an ecological magnitude of the transport resources to be used, the spatial and/or temporal availability of the infrastructural facilities, and the current and/or expected traffic condition along the transport route,
wherein the ecological magnitude characterizes a fuel consumption, an energy consumption and/or CO₂-emission of the transport resource.

7. Method (200) according to any of the previous claims, further comprising:
controlling securing means of the object and/or of the transport resource such that removal of the good and/or coupling with the transport resource is prevented and/or enabled.

8. Method (200) according to any of the previous claims, further comprising:
outputting route information which comprises at least one of a determined route, the two or more transport resources, the handover place and/or the handover time range, a cost value of the transport via the two or two or more transport resources, the length of the route, an expected duration for the transport of the object from the start to the destination, the current and/or expected location of the driver, the current location of the vehicle and the current location of the object.

9. Computer program product for determining a route, comprising instructions which, when the program is executed by a processor, cause the processor to perform a method (200) according to any one of claims 1 to 8.

10. Hardware module (100) for determining a route, comprising:
a memory (110), on which a computer program product according to claim 9 is; and
a processor (130), which is configured to execute the computer program product.

## Revendications

1. Procédé mis en œuvre par ordinateur (200) pour la détermination d'un itinéraire, comprenant les étapes suivantes :
la fourniture (210) d'une structure de données qui caractérise deux ou plus de deux ressources de transport (340, 350, 360), une ressource de transport (340, 350, 360) parmi les ressources de transport comprenant un véhicule destiné à transporter un objet,
l'objet à transporter comprenant au moins une marchandise et/ou un composant de véhicule tracté,
la marchandise étant **caractérisée par** au moins un élément parmi une dimension géométrique, les mètres de chargement requis, une masse, un nombre d'unités de transport remplies par la marchandise, une description d'emballage et une exigence de transport de la marchandise,
le composant de véhicule tracté étant **caractérisé par** au moins une spécification technique du composant de véhicule ;
la réception (220) d'une saisie d'itinéraire, la saisie d'itinéraire caractérisant un objet à transporter et un point de départ et un point de destination de l'objet ;
la détermination (230) de deux ou plus de deux ressources de transport (340, 350, 360) pour transporter l'objet du point de départ au point de destination ;
la détermination (240) d'un lieu de transfert et/ou d'un domaine temporel de transfert pour transférer l'objet à transporter d'une ressource de transport transférant l'objet à une ressource de transport recevant l'objet parmi les deux ou plus de deux ressources de transport déterminées,
la détermination (240) du lieu de transfert et/ou du domaine temporel de transfert s'effectuant sur la base d'une autonomie (341, 351, 361) temporelle et/ou spatiale des ressources de transport déterminées,
l'autonomie (341, 351, 361) temporelle et/ou spatiale étant déterminée sur la base d'au moins un élément parmi un niveau de remplissage du moyen de propulsion, en particulier un niveau de remplissage actuel et/ou prévisionnel du moyen de propulsion du véhicule, un niveau d'énergie, en particulier un niveau d'énergie actuel et/ou prévisionnel d'une batterie électrique du véhicule, un temps de conduite résiduel actuel et/ou prévisionnel d'un conducteur du véhicule, une position actuelle et/ou prévisionnelle du conducteur et/ou la disponibilité d'une infrastructure d'alimentation en énergie le long de l'itinéraire ;
la détermination (250), au moyen d'un algorithme d'optimisation, d'au moins un itinéraire du point de départ au point de destination sur la base du lieu de transfert et/ou du domaine temporel de transfert.

2. Procédé selon la revendication 1,
le composant de véhicule tracté étant **caractérisé par** au moins un élément parmi un détenteur, un propriétaire, un type, une identification et la spécification technique du composant de véhicule.

3. Procédé (200) selon la revendication 1 ou 2,
la saisie d'itinéraire caractérisant en outre une identité d'une personne et/ou d'une société entrant la saisie d'itinéraire.

4. Procédé (200) selon l'une quelconque des revendications précédentes,
le point de départ étant **caractérisé par** au moins un élément parmi un instant de départ le plus tôt possible, un instant de départ le plus tard possible, un instant de chargement prévisionnel pour charger l'objet sur la ressource de transport transférant l'objet et un lieu de départ, et/ou
le point de destination étant **caractérisé par** au moins un élément parmi un instant à destination le plus tôt possible, un instant à destination le plus tard possible, un instant de déchargement prévisionnel pour décharger l'objet au point de destination et d'un lieu de destination.

5. Procédé (200) selon l'une quelconque des revendications précédentes,
la ressource de transport étant en outre **caractérisée par** au moins un des éléments suivants :
une entreprise affectée à la ressource de transport ;
une indication de prix pour le transport au moyen de la ressource de transport ;
une ou plusieurs données de conducteur relatives à un conducteur de la ressource de transport,
les données de conducteur caractérisant un nom, un numéro de carte d'identité, un numéro de permis de conduire, un numéro de carte de conducteur, un ou plusieurs lieux d'hébergement possibles, une qualification, un temps de conduite, de repos et/ou de travail actuel et/ou prévisionnel du conducteur,
la qualification du conducteur faisant référence à au moins un élément parmi une catégorie de permis de conduire, un permis de transport de marchandises dangereuses, un indice de notation et les connaissances linguistiques du conducteur ;
une ou plusieurs données de véhicule permettant d'identifier le véhicule de la ressource de transport,
la donnée de véhicule caractérisant au moins un élément parmi un détenteur du véhicule, un numéro d'immatriculation, un numéro de châssis, un identificateur du tachygraphe, une restriction d'immatriculation et une indication technique,
l'indication technique comprenant au moins un élément parmi un type de véhicule, une hauteur de selle, des raccords électriques, des raccords pneumatiques, des dimensions géométriques, des indications de poids, des charges par essieu et une autonomie.

6. Procédé (200) selon l'une quelconque des revendications précédentes,
ledit au moins un itinéraire ou deux ou plus de deux itinéraires étant en outre déterminés sur la base d'au moins un élément parmi des ressources de transport à utiliser, une disponibilité spatiale et/ou temporelle d'installations d'infrastructure, d'une situation de trafic actuelle et/ou prévisionnelle le long d'un itinéraire de transport et au moins une grandeur cible prédéterminée,
l'au moins une grandeur cible caractérisant une valeur et/ou une plage de valeurs prédéterminée d'au moins un élément parmi l'itinéraire de transport de l'itinéraire, un temps de transport, une sécurité de transport, les coûts de transport, une grandeur écologique des ressources de transport à utiliser, la disponibilité spatiale et/ou temporelle d'installations d'infrastructure, la situation de trafic actuelle et/ou prévisionnelle le long de l'itinéraire de transport,
la grandeur écologique caractérisant une consommation de moyens de propulsion, une consommation d'énergie et/ou une émission de CO₂ de la ressource de transport.

7. Procédé (200) selon l'une quelconque des revendications précédentes, comprenant en outre :
la commande d'un dispositif de sécurité de l'objet et/ou de la ressource de transport, de manière à ce que le prélèvement de la marchandise et/ou un attelage à une ressource de transport soit empêché ou possible.

8. Procédé (200) selon l'une quelconque des revendications précédentes, comprenant en outre :
la sortie d'informations d'itinéraire comprenant au moins un élément parmi l'au moins un itinéraire déterminé, les deux ou plus de deux ressources de transport, le lieu de transfert et/ou le domaine temporel de transfert, une valeur de coûts du transport à l'aide de l'une des deux ou des deux ou plus de deux ressources de transport, la longueur de l'itinéraire, une durée prévisionnelle pour le transport de l'objet du point de départ au point de destination, une indication sur la sécurité du transport, une grandeur écologique, la position actuelle et/ou prévisionnelle du conducteur, la position actuelle du véhicule et une position actuelle de l'objet.

9. Produit de programme informatique destiné à déterminer un itinéraire, comprenant des instructions qui amènent un processeur à mettre en œuvre un procédé (200) selon l'une quelconque des revendications 1 à 8 lorsque le programme est exécuté par le processeur.

10. Module matériel (100) pour la détermination d'un itinéraire, comprenant
une mémoire (110) sur laquelle se trouve un produit de programme informatique selon la revendication 9 ; et
un processeur (130) qui est conçu pour exécuter le produit de programme informatique.
